# EUROPEAN PATENT APPLICATION

(11) **EP 4 443 691 A1**
(43) Date of publication of application: **09.10.2024**
(21) Application number: 22952304.8
(22) Date of filing: 27.07.2022
(51) Int. Cl.: H02J 3/28

(54) **CHARGING AND DISCHARGING CONTROL METHOD AND APPARATUS, DEVICE, AND STORAGE MEDIUM**

(71) Applicant: Contemporary Amperex Technology (Hong Kong) Limited, Central, Central And Western District (HK)
(72) Inventor: LI, Zhanliang, Ningde, Fujian 352100 (CN); YAN, Yu, Ningde, Fujian 352100 (CN); DAN, Zhimin, Ningde, Fujian 352100 (CN); HUANG, Shan, Ningde, Fujian 352100 (CN)
(74) Representative: Ziebig Hengelhaupt Intellectual Property Attorneys Patentanwaltskanzlei PartGmbB
(86) International application number: PCT/CN2022/108184
(87) International publication number: WO 2024/020840

(57) **Abstract**

Embodiments of the present application provide a charging and discharging control method and apparatus, a device, and a storage medium. The method is applied to a charging system, the charging system comprising at least two charging devices that are separately connected to batteries. The method comprises: determining, when at least one of the at least two batteries requests to be discharged, a discharging path for the battery requesting to be discharged according to charging and discharging parameters of batteries currently connected. The present application autonomously controls the discharging path based on the charging and discharging parameters of the batteries, which helps to shorten the discharging path so that the power discharged from batteries requesting to be discharged at the same moment can be directly charged through the DC bus into the batteries requesting to be charged, thus enabling the conversion path for that part of power to be very short and improving the charging efficiency, and saving energy and reducing the increase in charging costs resulting from power loss since shortening the discharging path will lead to less power loss. Moreover, lithium plating and battery polarization problems are mitigated by means of discharging, which improves the charging safety and also helps to increase the charging rate, thus achieving the effect of safe fast charging.

## Description

### Technical Field

The present application relates to the technical field of batteries and, in particular, to a charging and discharging control method and apparatus, a device, and a storage medium.

### Background

During the charging process of lithium-ion batteries, lithium ions migrate from the positive electrode to the negative electrode, and as the charging process continues, lithium ions are accumulated at the negative electrode. On the one hand, this limits the charging current, and on the other hand, continuous charging with large current may easily cause lithium plating in the battery cell, thus resulting in shortening of the service life of the battery, and even raising safety problems.

Currently, in the related art, small-rate discharging is added to the large-rate charging process in order to solve the problem of lithium plating in the battery cell by means of discharging. However, in the related art, the current released from the battery is released back into the power grid, and then charged from the power grid into the battery during the battery charging stage, which results in a long current path for this part of power released from the battery, thus making the charging inefficient and resulting in power loss and increasing the cost of charging the battery.

### Summary of the Invention

Embodiments of the present application provide a charging and discharging control method and apparatus, a device, and a storage medium, which, in the case where a charging system establishes charging and discharging connections with a plurality of batteries at the same time, ensures that when there is a battery to be discharged, the discharging path for the battery requesting to be discharged is automatically determined in accordance with the charging and discharging parameters of the batteries connected, thereby realizing the autonomous control of the discharging path, which helps to shorten the discharging path for the battery and improve the charging efficiency.

In a first aspect, embodiments of the present application provide a charging and discharging control method applied to a charging system, the charging system comprising at least two charging devices that are separately connected to batteries, the method comprising:
determining, when at least one of the at least two batteries requests to be discharged, a discharging path for the battery requesting to be discharged according to charging and discharging parameters of batteries currently connected.

In this embodiment, in the case where the charging system is connected to a plurality of batteries, when at least one of the batteries requests to be discharged, the discharging path for the battery requesting to be discharged is automatically determined based on the charging and discharging parameters of the batteries, thereby realizing the autonomous control of the discharging path, which helps to shorten the discharging path for the battery and improve the charging efficiency, and saves energy and reduces the increase in charging costs for the battery resulting from power loss since shortening the discharging path will lead to less power loss.

In some embodiments of the present application, said determining a discharging path for the battery requesting to be discharged according to charging and discharging parameters of batteries currently connected comprises:
determining the discharging path for the battery requesting to be discharged according to charging and discharging parameters of each of the batteries currently connected and a preset power condition, wherein the preset power condition comprises a total charging power of all the batteries currently connected being greater than or equal to a total discharging power.

In this embodiment, since the electric energy released by the battery requesting to be discharged can be charged to the battery requesting to be charged via the DC bus only if the total charging power is greater than or equal to the total discharging power without having to be fed back to the power grid, taking the total charging power being greater than or equal to the total discharging power as a preset power condition, a discharging path for the battery requesting to be discharged is determined in accordance with the charging and discharging parameters of the batteries and the preset power condition, which helps to determine a discharging path which passes through the DC bus directly to the battery requesting to be charged, so as to reduce the instances where the discharging path comprises flowing to the power grid or an energy storage apparatus of the charging system, thereby shortening the discharging path of the battery and increasing the charging efficiency, and reducing the power loss resulting from the power released by the battery flowing through the discharging path, thus saving energy and decreasing the charging cost of the electrical device.

In some embodiments of the present application, said determining the discharging path for the battery requesting to be discharged according to charging and discharging parameters of each of the batteries currently connected and a preset power condition comprises:
determining whether the preset power condition is currently satisfied according to the charging and discharging parameters of each of the batteries currently connected; and
if yes, determining the discharging path for the battery requesting to be discharged as flowing from the battery requesting to be discharged to a battery requesting to be charged via a DC bus; or
if no, controlling the battery requesting to be discharged to suspend discharging.

In this embodiment, if the preset power condition is currently being satisfied, which means that the total charging power of all the batteries is currently greater than or equal to the total discharging power, it is indicated that the power released by the battery requesting to be discharged can all be accepted by the battery requesting to be charged; therefore, the discharging path is determined to be flowing from the battery requesting to be discharged to the battery requesting to be charged via the DC bus, and the battery requesting to be discharged is controlled to be discharged following this discharging path, at which time the released power does not need to be fed back to the power grid or stored in the energy storage apparatus of the charging system, which causes the discharging path to be short, thereby improving the charging efficiency and avoiding power loss caused by an excessively long discharging path. In contrast, if it is determined that the total charging power is currently less than the total discharging power, it is indicated that if the battery requesting to be discharged is discharged, the power released cannot be accepted in full by the battery requesting to be charged, which results in the existence of redundant power that needs to be fed back to the power grid or be stored in the energy storage apparatus of the charging system, thus resulting in an excessively long discharging path. In order to reduce the occurrence of such a situation, in embodiments of the present application, when it is determined that the preset power condition is not satisfied, the battery currently requesting to be discharged is controlled to suspend discharging first, and this battery is then controlled to be discharged when the preset power condition is subsequently satisfied, thereby shortening its discharging path.

In some embodiments of the present application, after said controlling the battery requesting to be discharged to suspend discharging, the method further comprises:
determining periodically during a preset duration whether the preset power condition is currently satisfied; or
determining whether the preset power condition is currently satisfied whenever the presence of a battery switching from a discharging state to a charging state is detected during a preset duration.

In this embodiment, it is periodically judged whether the preset power condition is satisfied, which helps to control the suspended battery discharging in time when the condition is met, thus preventing the battery from suspending discharging for an excessively long period of time. Alternatively, since the amount of charging power that can be accepted in the entire system increases when there appears a battery of which the state is switched to the charged state, it is more likely that the preset power condition will be satisfied at this time, which makes it possible to reduce the number of repetitive judgments and save the computing resources of the charging device.

In some embodiments of the present application, the method further comprises:
determining, if the preset power condition is still not satisfied when a duration for which the battery requesting to be discharged is suspended from discharging reaches the preset duration, the discharging path as flowing from the battery requesting to be discharged to the power grid and/or to an energy storage apparatus in the charging system.

In this embodiment, if the preset power condition is still not satisfied when the duration for which the discharging is suspended reaches a preset duration, the battery is directly controlled to release the power to the power grid and/or the energy storage apparatus of the charging system, which can prevent the battery from being in the suspended state for a long period of time and prevent the total charging duration of the battery from being too long.

In some embodiments of the present application, said determining whether the preset power condition is currently satisfied according to the charging and discharging parameters of each of the batteries currently connected comprises:
calculating the total discharging power of all the batteries currently connected according to discharging parameters of batteries currently being discharged and discharging request parameters of the battery currently requesting to be discharged;
calculating the total charging power of all the batteries currently connected according to charging parameters of batteries currently being charged; and
determining whether the preset power condition is currently satisfied according to the total charging power and the total discharging power.

In this embodiment, the total charging power and the total discharging power of all the batteries currently connected can be quantitatively calculated according to the charging and discharging parameters of each of the batteries currently connected, and according to the calculated total charging power and total discharging power, it can be accurately judged whether the preset power condition is currently satisfied, and thus the discharging path for the battery currently requesting to be discharged can be accurately determined.

In some embodiments of the present application, said calculating the total discharging power of all the batteries currently connected according to discharging parameters of batteries currently being discharged and discharging request parameters of a battery currently requesting to be discharged; comprises:
calculating discharging power of all the batteries currently being discharged according to the discharging parameters of the batteries currently being discharged;
calculating requested discharging power of the battery currently requesting to be discharged according to the discharging request parameters of the battery currently requesting to be discharged; and
calculating the sum of the discharging power of all the batteries currently being discharged and the requested discharging power to obtain the total discharging power of all the batteries currently connected.

In this embodiment, the batteries currently in the discharging stage and the batteries currently requesting to be discharged are both taken into account, so that the total discharging power ultimately calculated is more accurate, thereby improving the accuracy of the subsequent judgment of whether or not the preset power condition is currently satisfied, thus allowing for a more accurate determination of the discharging path for the battery.

In some embodiments of the present application, if a plurality of batteries to be discharged that are suspended from discharging and currently requesting to be discharged exist, calculating the total discharging power of all the batteries currently connected according to discharging parameters of the batteries currently being discharged and discharging request parameters of the battery currently requesting to be discharged comprises:
determining all combinations of the plurality of batteries to be discharged, each combination in said all combinations at least comprising one battery to be discharged;
calculating discharging power of each of the batteries currently being discharged separately according to discharging parameters of each of the batteries currently being discharged; and calculating requested discharging power of each of batteries to be discharged in each combination separately according to discharging parameters of the batteries to be discharged in each combination; and
calculating a total discharging power corresponding to each combination separately according to the discharging power of all the batteries currently being discharged and requested discharging power of the batteries to be discharged in each combination.

In this embodiment, in the case where there exists a plurality of batteries to be discharged, for each combination form of the plurality of batteries to be discharged, the total discharging power corresponding to each combination form is calculated, so that it can be subsequently judged whether each combination form satisfies the preset power condition, thereby enabling the charging and discharging control to be more flexible, which helps in seeking the optimal combination form for the charging and discharging control.

In some embodiments of the present application, determining whether the preset power condition is currently satisfied according to the total charging power and the total discharging power comprises:
judging in each combination whether a combination whose total discharging power being less than or equal to the total charging power exists; and
if exists, determining that the preset power condition is currently satisfied.

In this embodiment, in the case where a plurality of batteries to be discharged exist, all combinations of the plurality of batteries are determined and it is judged in units of combinations whether or not each combination satisfies the preset power condition, so that it is possible to determine, based on the control situation of the total charging power and the total discharging power, that one or more of the batteries to be discharged are allowed to be discharged, thus enabling the controlling process in the case where there is a plurality of batteries to be discharged to be more flexible and more efficient.

In some embodiments of the present application, the method further comprises:
if it is judged that one combination whose total discharging power being less than or equal to the current total charging power exists, controlling batteries to be discharged in the judged combination to be discharged; or
if it is judged that a plurality of combinations whose total discharging power being less than or equal to the total charging power exist, determining a target combination containing a maximum number of batteries to be discharged from the plurality of combinations; if one said target combination is determined, controlling each battery to be discharged in the target combination to be discharged; or if a plurality of said target combinations are determined, selecting from the plurality of target combinations a target combination in which batteries to be discharged are suspended from discharging for the greatest duration, and controlling each battery to be discharged in the selected target combination to be discharged.

In this embodiment, when a plurality of candidate combinations judged exist, the combination containing a maximum number of batteries to be discharged is selected, so that more batteries to be discharged can be controlled to be discharged, thereby shortening the total charging duration of these batteries. When a plurality of combinations containing a maximum number of batteries to be discharged exist, a duration for which each battery to be discharged in the plurality of combinations is suspended from discharging is determined separately, and a battery to be discharged that has been suspended from discharging for the greatest duration is determined, and each battery to be discharged in the combination containing that battery to be discharged is controlled to be discharged. In this way, it is possible to ensure that the battery that has been suspended from discharging for the greatest duration resumes discharging, thereby avoiding an excessively long waiting time for that battery.

In some embodiments of the present application, said controlling the battery requesting to be discharged to suspend discharging comprises:
controlling an output voltage of a charging device connected to the battery requesting to be discharged to be a current voltage of said battery requesting to be discharged; or
controlling a charging device connected to the battery requesting to be discharged to suspend outputting.

In this embodiment, in the case where the total charging power is less than the total discharging power, the battery requesting to be discharged is controlled to suspend discharging so as to avoid the presence of redundant power in the whole charging system that cannot be accepted by batteries that are in the charging stage, so that by controlling the charging device that is connected to that battery to suspend outputting or the output current to be zero, the control process is made simple and efficient.

In some embodiments of the present application, the method further comprises:
if the charging system establishes charging and discharging connections with a plurality of batteries at the same moment, controlling charging devices connected to the plurality of batteries to activate a charging function in sequence.

That is, although the plurality of batteries establishes charging and discharging connections with the charging system at the same time, the charging system controls the charging device to which each battery is connected to start up according to a certain time sequence, so that the actual charging processes of the plurality of batteries start in sequence, thereby making the discharging stages of the plurality of batteries not fully synchronized so as to reduce the occurrence of the situation in which the total charging power is less than the total discharging power, thus making the subsequent control process smoother, reducing the complexity of control and improving the charging efficiency.

In a second aspect, embodiments of the present application provide a charging and discharging control apparatus applied to a charging system, the charging system comprising at least two charging devices that are separately connected to batteries, the apparatus comprising:
a discharging path determination module for determining, when at least one of the at least two batteries requests to be discharged, a discharging path for the battery requesting to be discharged according to charging and discharging parameters of batteries currently connected.

In a third aspect, embodiments of the present application provide a charging system, comprising: a control unit, a power converter, a DC bus and a plurality of charging devices, wherein
the power converter is separately connected with the power grid and the DC bus;
the plurality of charging devices are all connected with the DC bus, and each of the charging devices is used for connecting with a battery; and
the control unit is used for executing the method as described in the above first aspect.

In some embodiments of the present application, an energy storage apparatus and a corresponding voltage converter thereof are further included, wherein
the energy storage apparatus is connected through the corresponding voltage converter thereof to the DC bus.

In a fourth aspect, embodiments of the present application provide an electronic device, comprising a memory, a processor, and a computer program stored in the memory and runnable on the processor, wherein the processor, when executing the computer program, implements the method as described in the first aspect.

In a fifth aspect, embodiments of the present application provide a computer-readable storage medium storing a computer program, wherein the computer program, when executed by a processor, implements the method as described in the first aspect.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific implementations of the present application are exemplified below.

### Description of Drawings

In order to illustrate the technical solutions of the embodiments of the present application more clearly, the following briefly introduces the drawings required in the embodiments of the present application. Obviously, the drawings described below are only some embodiments of the present application. For those of ordinary skill in the art, other drawings can also be obtained according to the drawings without any creative effort.
Fig. 1 is a current waveform graph for the addition of a discharging stage in a charging process as provided in an embodiment of the present application.
Fig. 2 is a structural schematic diagram of a charging system as provided in an embodiment of the present application.
Fig. 3 is a structural schematic diagram of another charging system as provided in an embodiment of the present application.
Fig. 4 is a schematic flowchart of a charging and discharging control method as provided in an embodiment of the present application.
Fig. 5 is a current waveform graph of vehicle 1, vehicle 2, and vehicle n during the charging process as provided in an embodiment of the present application;
Fig. 6 is a structural schematic diagram of a charging and discharging control apparatus as provided in an embodiment of the present application.
Fig. 7 is a structural schematic diagram of an electronic device as provided in an embodiment of the present application.

### Detailed Description

Embodiments of the present application will be described in further detail hereinafter in conjunction with the accompanying drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are only used for descriptive purposes, and cannot be construed as indicating or implying relative importance. "Vertical" does not mean being vertical in the strict sense, but within the permissible range of error. "Parallel" does not mean being parallel in the strict sense, but within the permissible range of error.

Orientation words appearing in the following description are all directions shown in the drawings, and do not limit the specific structure of the present application. In the description of the present application, it should also be noted that, unless otherwise expressly specified and defined, the terms "install", "connected" and "connect" should be understood in a broad sense, for example, they may be fixedly connected, detachably connected or integrally connected; and they may be directly connected or indirectly connected through an intermediate medium. For those of ordinary skill in the art, the specific meanings of the above terms in the present application may be understood according to specific circumstances.

At present, batteries are widely used in electric bicycles, electric motorcycles, electric cars and other electric vehicles, as well as military equipment and aerospace and many other fields. In electric transportation supplies, military equipment, aerospace, and other fields, power is usually provided through batteries. However, one of the most criticized aspects of electrical devices that use batteries is the long charging time, and the charging time greatly constrains the acceptance of electrical devices, such as electric vehicles, by the general public. How to improve the charging speed in order to shorten the charging time has become a difficult hurdle that must be overcome in the development of electrical devices.

In the context of improving the charging speed to shorten the charging time, the prior art mainly relies on unidirectional charging devices (e.g., unidirectional charging piles), and it, on the one hand, improves the output power of the unidirectional DC charging device, and on the other hand, improves the continuous maximum charging current allowed by the battery, which means that it improves the charging speed by simultaneous actions from these two dimensions. Typically, the battery is of a power battery cell type, which improves the low-temperature performance of the battery cell and cooperatively improves the power of the DC charging device, and when the temperature of the battery reaches the optimal charging temperature point of the battery cell, the BMS requests the maximum charging current of the battery from the charging device, thereby realizing the super-fast charging function.

However, at present, the batteries are usually lithium batteries and, expressed at the microscopic level of lithium battery materials, during charging, the charging process is completed when lithium ions migrate from the positive electrode to the negative electrode and become intercalated into the negative electrode material. Improving the charging speed refers to accelerating migration and intercalation of lithium ions. During unidirectional large-rate continuous charging, lithium ions are accumulated at the negative electrode. On the one hand, this limits the charging current, and on the other hand, large-current continuous charging is likely to cause lithium plating in the battery cell, which leads to a reduction in the thermal stability of the negative electrode of the battery, and at the same time, the formed lithium dendrites may puncture the separator, which leads to a short circuit of the positive and negative electrodes, thus reducing the service life of the lithium battery, and even inducing a serious safety problem such as thermal runaway. Therefore, during the fast charging of the battery as described above, the cumulative effect of lithium ions at the negative electrode cannot be eliminated in a timely manner, and therefore the amount of charging speed that can be improved is limited.

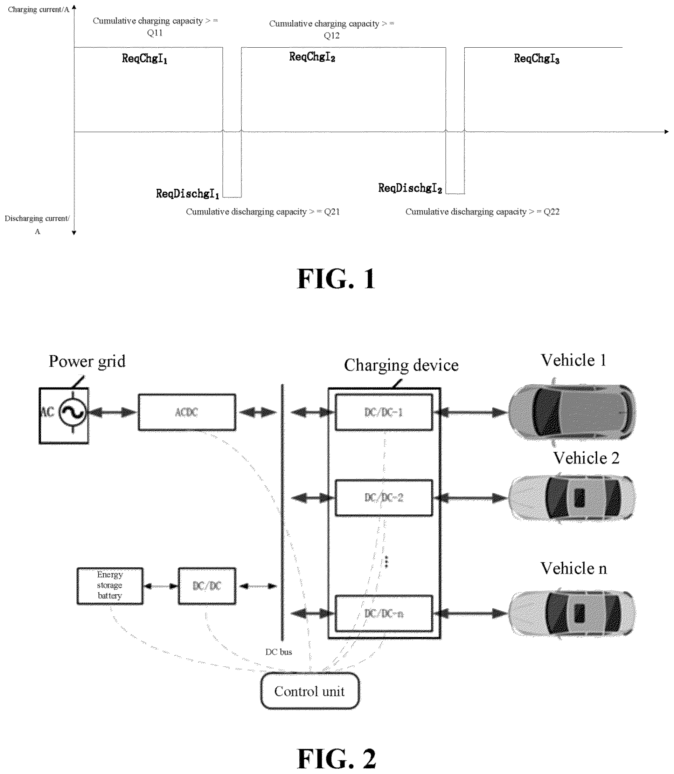

In the course of researching on how to solve the problem of accumulation of lithium ions at the negative electrode during the charging process, the inventors found that, in the related art, a short-time discharging process may be added into the charging process in order to eliminate the accumulation of lithium ions at the negative electrode of the lithium battery in a timely manner by means of discharging. As shown in Fig. 1, the charging process switches between the charging current and the discharging current, wherein during one charging cycle, the charging current is ReqChgI1 and the cumulative charging capacity >= Q11, and then the process switches to the discharging state, where the discharging current is ReqDischgI1 and the cumulative discharging capacity >= Q21. The charging and discharging processes are repeated, and the magnitudes and durations of the charging current ReqChgI1 and the discharging current ReqDischgI1 are dynamically adjusted according to the state of the battery. Here, the cumulative charging capacity is greater than the cumulative discharging capacity in each cycle, and the discharging current may be less than the charging current in one cycle, or may be greater than or equal to the charging current. The discharging duration is less than the charging duration in one cycle.

Adding a small-rate discharging process to the large-rate charging process effectively eliminates the problem of accumulation of lithium ions at the negative electrode, and attenuates or even eliminates the phenomenon of battery polarization, thus improving the safety of battery charging, and, at the same time, helps to improve the charging rate of the battery, thus realizing the purpose of safe and fast charging of the battery.

When performing fast charging using the approach described above of adding a discharging stage to the charging process, it is necessary to use a charging device that is capable of both charging and discharging. The charging device needs to be capable of releasing the power discharged from the battery to the power grid or to an energy storage apparatus within the charging system. For application scenarios of charging systems such as charging stations or battery swapping stations, there is usually a plurality of electrical devices that are charged at the same time, each of which separately establishes a charging and discharging connection with a charging device. The inventors have found that when a charging system is performing fast charging of the batteries of a plurality of electrical devices at the same time, the power discharged by the battery of each of the electrical devices during the discharging stage is released to the power grid or to an energy storage apparatus within the charging system, while in the charging stage, power is then charged from the power grid or energy storage apparatus to the batteries of the electrical devices. As a result, the path through which this part of power released by batteries is eventually charged back into batteries is too long, and this leads to inefficient charging and causes more power loss throughout the process, while the cost of the power loss will be borne by the user, which increases the cost of using the electrical device by the user.

Based on this, the inventors of the present application have designed, through in-depth research, a charging and discharging control method, in which a charging system comprises at least two charging devices that separately establish charging and discharging connections with batteries, and when at least one of the at least two batteries requests to be discharged, a discharging path for the battery requesting to be discharged is determined according to charging and discharging parameters of the batteries currently connected.

In the case where the charging system is connected to a plurality of batteries, when at least one of the batteries requests to be discharged, the discharging path for the battery requesting to be discharged is automatically determined based on the charging and discharging parameters of the batteries, thereby realizing the autonomous control of the discharging path, which helps to shorten the discharging path for the battery and improve the charging efficiency, and saves energy and reduces the increase in charging costs for the battery resulting from power loss since shortening the discharging path will lead to less power loss.

The charging and discharging control method provided in embodiments of the present application is applicable to any charging system that is capable of both charging batteries and receiving discharges from batteries, and that charging and discharging control method comprises at least two charging devices. This charging system may be a battery swapping station, a charging station, or a photovoltaic energy storage system, etc., and the charging device may be a charging pile, a charging and discharging machine, a charger, and so on. The battery charged using the charging system may be a single battery cell, or a battery group or pack comprising a plurality of single battery cells, or the like. The charging system may utilize the method provided by embodiments of the present application to charge and discharge a battery of any electrical device, which may be, but is not limited to, an electric toy, an electric tool, an electric car, an electric vehicle, a ship, or a spacecraft, and the like, that has a battery. Among them, the electric toy may include a stationary or mobile electric toy, for example, a game console, an electric car toy, an electric ship toy, and an electric aircraft toy, and the like, and the spacecraft may include an aircraft, a rocket, a space shuttle and a spaceship, and the like.

In embodiments of the present application, the charging system can maintain charging and discharging connections with a plurality of batteries at the same time, thereby charging or discharging the plurality of batteries at the same time. The charging system may comprise a control unit, a power converter, a DC bus, and a plurality of charging devices. Among them, the power converter is separately connected to the power grid and the DC bus, the plurality of charging devices are all connected to the DC bus, and the control unit is separately connected to the power converter and the plurality of charging devices.

The power converter may be an AC/DC (alternating current/direct current) converter, and the power converter is used to convert AC power from the power grid to DC power. The DC side of the power converter is called DC bus, and the voltage converter converts the AC power from the power grid to DC power and then transmits the DC power to the DC bus.

The charging device may be a voltage converter, such as a DC/DC converter, for converting electric energy of one voltage value to electric energy of another voltage value in a DC circuit. In the charging system of embodiments of the present application, the charging device described above is used to reduce or increase the voltage of the DC bus, and then supply same to the battery for charging, or to release the electric energy of the battery to the DC bus.

The control unit may be the processor of the charging system, and the control unit may also be composed of a plurality of controllers with smaller functions, which is not limited here. This control unit is connected to the power converter and is used to control the power converter to activate the rectification function to convert AC power from the power grid to DC power so as to charge the battery. Alternatively, the control unit is used to control the power converter to activate the inversion function to convert the DC power at the DC bus side to AC power, so as to drain the electric energy released from the battery into the power grid. The control unit is also connected to each of the charging devices and, in practical applications, the charging device is used to connect to the battery in the electrical device, and the control unit controls the charging device to adjust the voltage at the DC bus side so as to charge electric energy at the DC bus side to the battery or to release electric energy discharged from the battery to the DC bus.

In some other embodiments, the charging system further comprises an energy storage apparatus and a voltage converter connected to the energy storage apparatus, wherein the energy storage apparatus is connected to the DC bus through the voltage converter and the control unit is also connected to the voltage converter. The control unit is used to control this voltage converter to adjust the voltage to store the electric energy released from the battery to the DC bus into this energy storage apparatus or, alternatively, to charge the electric energy in the energy storage apparatus to the battery through the DC bus. Here, the energy storage apparatus may be a storage battery or a photovoltaic panel, and so on.

It should be noted that the energy storage apparatus as well as the voltage converter connected between the energy storage apparatus and the DC bus are not necessary, and if the current converter supports a bidirectional flow function of electric energy, that is to say, it can both rectify AC power into DC power and invert the DC power into AC power and feed it back into the power grid, then in this case, in the charging system, the energy storage apparatus and its corresponding voltage converter may or may not be arranged.

In order to facilitate the understanding of the structure of the charging system as described above, illustrations are given below in conjunction with the accompanying drawings by way of a specific example, in which an electric vehicle is taken as an example of the electrical device. As shown in Fig. 2, the charging system comprises a control unit, a power converter AC/DC, a DC bus, charging devices DC/DC-1, DC/DC-2, ..., and DC/DC-n, and comprises an energy storage battery and a voltage converter DC/DC that is connected separately to the energy storage battery and the DC bus. Among them, DC/DC-1, DC/DC-2, ..., and DC/DC-n are all used to connect to the batteries of the electric vehicles. In Fig. 2, dashed lines show that the control unit is connected separately to AC/DC, DC/DC-1, DC/DC-2, ..., and DC/DC-n, the energy storage battery, and the DC/DC corresponding to the energy storage battery.

In one use condition of the charging system, there is only one electric vehicle to be charged, and it is assumed that the electric vehicle is connected to DC/DC 1 for charging. Then, at the beginning stage of charging, DC/DC 1 performs a voltage conversion of the electric energy from the DC bus and then outputs DC power as required by the BMS of that electric vehicle. When the energy charged to the battery accumulates to an upper limit threshold W1, a fast switching is performed to requesting a certain discharging current. At this time, the DC/DC 1 is switched to the discharging state, and the AC/DC and/or the DC/DC connected to the energy storage battery are/is also switched to the discharging state, so as to drain the power released from the battery of the electric vehicle to the power grid, and/or, to store the released power to the energy storage battery. By adding a discharging stage to the charging process, lithium ions accumulated at the negative electrode of the battery are eliminated, which avoids lithium plating caused by the accumulation of lithium ions and ensures large-rate charging without damaging the service life of the battery, thereby realizing super-fast charging.

In another use condition of the charging system, there exists a plurality of electric vehicles to be charged, each of which is connected separately to a DC/DC. As shown in Fig. 2, there are vehicle 1, vehicle 2, ..., and vehicle n, wherein DC/DC-1 is connected to vehicle 1, DC/DC-2 is connected to vehicle 2, and DC/DC-n is connected to vehicle n. The charging device performs fast charging for vehicle 1, vehicle 2, ..., and vehicle n, and performs large-rate charging in combination with small-rate discharging during the fast charging. If the total discharging power of all vehicles in the whole circuit is greater than the total charging power, part of the additional discharged power, δW, needs to be fed back to the power grid via AC/DC or charged into the energy storage battery via DC/DC connected to the energy storage battery. When the charging power is greater than the discharging power in the next charging stage, it is again necessary to additionally acquire a part of power from the power grid. The power released from the battery of vehicle 1 is used as an example for illustration. The overall conversion path for this part of power is: the battery of vehicle 1 -> DC/DC 1 -> AC/DC -> the power grid -> AC/DC -> DC/DC 1 -> the battery of vehicle 1, or, the battery of vehicle 1 -> DC/DC 1 -> DC/DC corresponding to the energy storage battery -> the energy storage battery -> DC/DC corresponding to the energy storage battery -> DC/DC1 -> the battery of vehicle 1. In this way, electric energy is subjected to multi-level transformations with low conversion efficiency, and the power loss in this scenario will ultimately be paid for by the vehicle owner, which increases the use cost of the vehicle for the owner.

In contrast, in the embodiment of the present application, in an application scenario in which the charging system establishes connections with a plurality of electric vehicles at the same time, the charging system, upon receiving a discharging request from at least one battery, determines a discharging path for the battery requesting to be discharged according to the charging and discharging parameters of the batteries currently connected, thereby realizing the automatic control of the discharging path, which helps to shorten the discharging path. Illustration is provided still taking the power released by the battery of vehicle 1 as an example. When vehicle 1 needs to be discharged to the charging system, the discharging path for the battery of vehicle 1 is determined in accordance with the charging and discharging parameters of the batteries currently connected, so that electric energy discharged therefrom passes directly through the DC bus and is then charged to another vehicle m that is in the charging stage. The conversion path for the power released from vehicle 1 is: the battery of vehicle 1 -> DC/DC1 -> DC bus -> DC/DCm -> the battery of vehicle m.

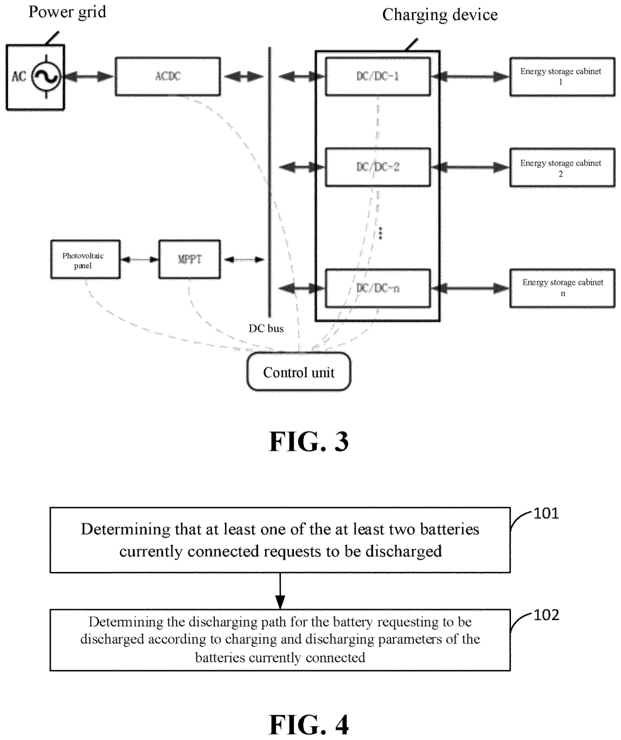

In the application scenario of photovoltaic energy storage, illustration is provided by taking the electrical device being an energy storage cabinet as an example. As shown in Fig. 3, the charging system comprises a control unit, a power converter AC/DC, a DC bus, a charging device DC/DC-1, DC/DC-2, ..., and DC/DC-n, and comprises a photovoltaic panel, and a voltage converter MPPT (Maximum Power Point Tracker) connected to the photovoltaic panel and the DC bus. Among them, DC/DC-1, DC/DC-2, ..., and DC/DC-n are used to connect to the batteries in the energy storage cabinet. In Fig. 3, dashed lines show that the control unit is separately connected to AC/DC, DC/DC-1, DC/DC-2, ..., and DC/DC-n, the photovoltaic panel, and the MPPT corresponding to the photovoltaic panel.

As shown in Fig. 3, there are an energy storage cabinet 1, an energy storage cabinet 2, ..., and an energy storage cabinet n, wherein DC/DC-1 is connected to the energy storage cabinet 1, DC/DC-2 is connected to the energy storage cabinet 2, and DC/DC-n is connected to the energy storage cabinet n. DC/DC-1, DC/DC-2, ..., and DC/DC-n charge and discharge the energy storage cabinet 1, the energy storage cabinet 2, ..., and the energy storage cabinet n, respectively. Illustration is provided taking the power released by the battery of the energy storage cabinet 1 as an example. When the energy storage cabinet 1 needs to be discharged to the charging system, the discharging path for the battery of the energy storage cabinet 1 is determined in accordance with the charging and discharging parameters of the batteries currently connected, so that electric energy discharged therefrom passes directly through the DC bus and is then charged to another energy storage cabinet m that is in the charging stage. The conversion path for the power released from the energy storage cabinet 1 is: the battery of the energy storage cabinet 1 -> DC/DC1 -> DC bus -> DC/DCm -> the battery of the energy storage cabinet m.

As can be seen from the above example that combines Figs. 2 and 3, embodiments of the present application autonomously determine the discharging path in accordance with the charging and discharging parameters of the batteries, which can make the conversion path for electric energy short, so the conversion efficiency is high, the power loss is low, and it will not bring an additional cost burden to the user. This can both eliminate the accumulation of lithium ions at the negative electrode by means of discharging, and attenuate or even eliminate the battery polarization phenomenon, thus improving charging safety, and also help to enhance the charging rate of the battery and improve the charging efficiency, thus realizing the effect of safe and fast charging.

Embodiments of the present application provide a charging and discharging control method applied to a charging system. The charging system comprises at least two charging devices, each of which is used for connecting with a battery, and in the case where the charging system establishes charging and discharging connections with a plurality of batteries at the same time, refer to the flowchart of the charging and discharging control method shown in Fig. 4, the method specifically comprises the following steps:
Step 101: determining that at least one of the at least two batteries currently connected requests to be discharged.

The execution subject of embodiments of the present application is a charging system, which may be realized by a control unit included in the charging system. The charging device in the charging system may be a device that is capable of both charging the battery and receiving discharging from the battery.

When the battery of the electrical device needs to be charged, the plug gun of the charging device is plugged into the charging socket of the electrical device, and when the control module of the electrical device detects that the plug gun is plugged in, it controls the battery to rise to a high voltage in order to enter fast charging for charging. Here, rising to a high voltage means closing the main positive relay and the main negative relay of the battery so as to conduct the charging circuit in which the battery is located. The control module of the electrical device also establishes a communication connection with the charging device. In embodiments of the present application, the charging system may establish charging and discharging connections with the batteries of a plurality of electrical devices at the same time via at least two charging devices.

Here, a charging and discharging connection is used to denote a connection with a battery via a charging device, which can both charge the battery and discharge the battery.

After the battery of the electrical device establishes a charging and discharging connection with the charging device and establishes a communication connection with the charging device, the control module of the electrical device determines a requested charging current and a requested charging voltage that the battery can currently accept and sends a charging request to the charging device, wherein the charging request comprises a current voltage of the battery, the requested charging current, and the requested charging voltage. Based on the charging request sent by the electrical device, the charging device charges the battery of the electrical device with the requested charging current and the requested charging voltage that are included in the charging request.

After the charging device has charged the electrical device for a period of time, the control module of the electrical device controls the battery to switch from the charging state to the discharging state. At this point, the electrical device sends a discharging request to the charging device. Since the switching of the battery from the charging state to the discharging state is carried out under the control of the control module of the electrical device, the charging device cannot predict in advance when the battery of the electrical device needs to be discharged. Therefore, upon receiving the discharging request from at least one battery, the operation of step 102 below is used to determine a discharging path for the battery requesting to be discharged.

Step 102: determining the discharging path for the battery requesting to be discharged according to charging and discharging parameters of the batteries currently connected.

In embodiments of the present application, a preset power condition is pre-configured in the control unit of the charging system, the preset power condition comprising the total charging power of all the batteries currently connected being greater than or equal to the total discharging power. The discharging path for the battery requesting to be discharged is determined according to charging and discharging parameters of each of the batteries currently connected and the preset power condition. The discharging path is the path through which the current flows as it flows out of the battery and to the target during discharging of the battery.

Since the electric energy released by the battery requesting to be discharged can be charged to the battery requesting to be discharged via the DC bus only if the total charging power is greater than or equal to the total discharging power without having to be fed back to the power grid, taking the total charging power being greater than or equal to the total discharging power as a preset power condition, a discharging path for the battery requesting to be discharged is determined in accordance with the charging and discharging parameters of the batteries and the preset power condition, which helps to determine a discharging path which passes through the DC bus directly to the battery requesting to be charged, so as to reduce the instances where the discharging path comprises flowing to the power grid or an energy storage apparatus of the charging system, thereby shortening the discharging path of the battery and increasing the charging efficiency, and reducing the power loss resulting from the power released by the battery flowing through the discharging path, thus saving energy and decreasing the charging cost of the electrical device.

Specifically, it is determined whether the preset power condition is currently satisfied according to the charging and discharging parameters of each of the batteries currently connected; and if yes, the discharging path for the battery requesting to be discharged is determined as flowing from the battery requesting to be discharged to a battery requesting to be charged via a DC bus; or if no, the battery requesting to be discharged is controlled to suspend discharging.

If the preset power condition is currently being satisfied, meaning that the total charging power of all the batteries is currently greater than or equal to the total discharging power, it is indicated that the power released by the battery requesting to be discharged can all be accepted by the battery requesting to be charged; therefore, the discharging path is determined to flow from the battery requesting to be discharged to the battery requesting to be charged via the DC bus, and the battery requesting to be discharged is controlled to be discharged following this discharging path, at which time the released power does not need to be fed back to the power grid or stored in the energy storage apparatus of the charging system, which causes the discharging path to be short, thereby improving the charging efficiency and avoiding power loss caused by an excessively long discharging path. In contrast, if it is determined that the total charging power is currently less than the total discharging power, it is indicated that if the battery requesting to be discharged is discharged, the power released cannot be accepted in full by the battery requesting to be charged, which results in the existence of redundant power that needs to be fed back to the power grid or be stored in the energy storage apparatus of the charging system, thus resulting in an excessively long discharging path. In order to reduce the occurrence of such a situation, in embodiments of the present application, when it is determined that the preset power condition is not satisfied, the battery currently requesting to be discharged is controlled to suspend discharging first, and this battery is then controlled to be discharged when the preset power condition is subsequently satisfied, thereby shortening its discharging path.

In embodiments of the present application, upon controlling the battery requesting to be discharged to suspend discharging, the duration that the battery is suspended from discharging is also started to be recorded. A preset duration is pre-configured in the control unit of the charging system, where the preset duration is the maximum duration for which the battery is allowed to suspend discharging, and the preset duration may be 4 min, 5 min, or 6 min, and the like.

If the battery requesting to be discharged has been controlled to suspend discharging as described above, as an implementation, it is periodically determined during the preset duration whether the preset power condition is currently satisfied. The duration of one cycle may be 0.2 s, 0.5 s, or 1 s, and so on. Each periodic judgment process is the same as the judgment process described above for determining whether the preset power condition is satisfied, and will not be repeated herein. It is periodically judged whether the preset power condition is satisfied, which helps to control the suspended battery discharging in time when the condition is met, thus avoiding the battery suspending discharging for an excessively long period of time.

Alternatively, as another implementation, it is determined whether the preset power condition is currently satisfied whenever the presence of a battery switching from a discharging state to a charging state is detected during a preset duration. Since the amount of charging power that can be accepted in the entire system increases when there appears a battery of which the state is switched to the charged state, it is more likely that the preset power condition will be satisfied at this time, which makes it possible to reduce the number of repetitive judgments and save the computing resources of the charging device.

In some embodiments, the charging device compares the duration for which the battery is suspended with the preset duration every certain period of time, and if it is found by the comparison that the duration for which the battery is suspended is less than the preset duration, the battery is continued to be kept suspended from discharging, and a judgment is made as described above as to whether the preset power condition is satisfied. If the comparison shows that the preset power condition is still not satisfied when the duration for which the battery is suspended for discharging reaches the preset duration, the discharging path is determined as flowing from the battery requesting to be discharged to the power grid and/or to an energy storage apparatus in the charging system, and the battery is controlled to be discharged in accordance with the determined discharging path.

If the preset power condition is still not satisfied when the duration of suspended discharging reaches a preset duration, the battery is directly controlled to release the power to the power grid and/or the energy storage apparatus of the charging system, which can prevent the battery from being in the suspended state for a long period of time and prevent the total charging duration of the battery from being too long.

If the preset power condition is still not satisfied when the duration for which the battery is suspended from discharging reaches the preset duration, the charging system activates the discharging function of the charging device connected to this battery, and controls this battery to start discharging according to the requested discharging current and requested discharging voltage included in the discharging request parameters of this battery. At the same time, the charging system also activates the inversion function of the power converter to release the power discharged from this battery into the power grid, and/or the charging system activates the voltage converter corresponding to the energy storage apparatus within the charging system to store the power discharged from that battery into the energy storage apparatus. After being discharged, the battery may be switched to the charging state to continue to be charged so as to prevent the battery from being left uncharged for a long period of time.

The above determining whether the preset power condition is currently satisfied according to the charging and discharging parameters of each of the batteries currently connected specifically comprises:
calculating the total discharging power of all the batteries currently connected according to discharging parameters of batteries currently being discharged and discharging request parameters of a battery currently requesting to be discharged; calculating the total charging power of all the batteries currently connected according to charging parameters of batteries currently being charged; and determining whether the preset power condition is currently satisfied according to the total charging power and the total discharging power.

Here, a battery currently being discharged is a battery that is currently in the discharging stage, and its discharging parameters comprise an actual discharging current and an actual discharging voltage that are output by the charging device connected to the battery currently being discharged in response to the discharging request from the battery currently being discharged. The battery currently requesting to be discharged is a battery currently sending a discharging request to the charging device, which is requesting to be discharged and has not yet been discharged, and the discharging request parameters of this battery comprise a discharging request current and a discharging request voltage carried in the discharging request sent by this battery. The batteries currently being charged comprise a battery that is in a charging stage and a battery currently requesting to be charged, wherein the battery currently requesting to be charged has not yet started to be charged. Charging parameters of a battery that is being in the charging stage comprise an actual charging current and an actual charging voltage that are output by the charging device in response to a charging request from the battery currently being charged. The charging parameters of the battery currently requesting to be charged comprise a charging request current and a charging request voltage carried in the charging request that is currently sent by that battery.

The total charging power and the total discharging power of all the batteries currently connected can be quantitatively calculated according to the charging and discharging parameters of each of the batteries currently connected, and according to the calculated total charging power and total discharging power, it can be accurately judged whether the preset power condition is currently satisfied, and thus the discharging path for the battery currently requesting to be discharged can be accurately determined.

For the total charging power, the product of the actual charging currents and the actual charging voltages corresponding to the batteries that are in the charging stage can be calculated to obtain the charging power of the batteries that are in the charging stage. Further, the product of the charging request current and the charging request voltage corresponding to the battery currently requesting to be charged is calculated to obtain the charging request power of the battery currently requesting to be charged. The sum of the charging power of each battery that is in the charging stage and the charging request power of each battery currently requesting to be charged is calculated to obtain the total charging power of all the batteries currently connected.

For the total discharging power, discharging power of all the batteries currently being discharged is calculated according to the discharging parameters of the batteries currently being discharged. Specifically, the product of the actual discharging current and the actual discharging voltage corresponding to the battery currently being discharged is calculated to obtain the discharging power of the battery currently being discharged. Requested discharging power of the battery currently requesting to be discharged is calculated according to the discharging request parameter of the battery currently requesting to be discharged. Specifically, the product of the discharge request current and the discharge request voltage corresponding to the battery currently requesting to be discharged is calculated to obtain the requested discharging power of the battery currently requesting to be discharged. The sum of the discharging power of all the batteries currently being discharged and the requested discharging power is calculated to obtain the total discharging power of all the batteries currently connected.

The batteries currently in the discharging stage and the batteries currently requesting to be discharged are both taken into account, so that the total discharging power ultimately calculated is more accurate, thereby improving the accuracy of the subsequent judgment of whether or not the preset power condition is currently satisfied, thus allowing for a more accurate determination of the discharging path for the battery.

In order to facilitate understanding of the control process provided by embodiments of the present application, the charging and discharging processes of the charging system for a plurality of batteries are described below, starting with the charging start stage. In the charging start stage, all electrical devices start with charging, so that at this time, constantly, the total charging power Wc ≥ the total discharging power Wdisc, which means that the preset power condition is satisfied in the charging start stage. Therefore, each electrical device can enter the charging stage immediately after it has just established a charging and discharging connection and a communication connection with the charging device.

The control unit of the charging system detects in real time whether or not a discharging request from a battery of the electrical device is received, and upon detection of the discharging request, determines a discharging path for the battery requesting to be discharged according to the charging and discharging parameters of the batteries currently connected. Since the control process of the charging device is the same for the discharging request of any battery, embodiments of the present application are illustrated by taking a first battery as an example, the first battery being any one of a plurality of batteries with which the charging device has currently established charging and discharging connections.

Specifically, the charging device receives a discharging request of the first battery, the discharging request including a current voltage, a requested discharging current, and a requested discharging voltage of the first battery. The charging device determines whether the preset power condition is currently satisfied based on the charging power of the battery currently being charged, the discharging power of the battery currently being discharged, and the requested discharging power of the first battery.

Whenever the charging system receives a discharging request from a battery, it makes a judgment on the total charging power and the total discharging power according to the charging and discharging parameters of all the current batteries and determines whether to allow the battery currently requesting to be discharged to be discharged based on the judgment result, and determines the discharging path for the battery currently requesting to be discharged to ensure that the total charging power of a plurality of batteries currently connected is greater than or equal to the total discharging power, thus enabling the electric energy released from all batteries being discharged to be directly charged to batteries that are in the charging stage through the DC bus without having to go through multiple levels of transformation before being drained to the power grid or to the energy storage apparatus of the charging system. This causes the conversion path for the power released from a battery that is being discharged to be very short, which not only increases the charging efficiency, but also eliminates the accumulation of lithium ions at the negative electrode by means of discharging, thereby improving the charging safety, and results in very low power loss so that there is no additional cost burden on the user.

After the discharging request of the first battery is received, the sum of the discharging power of all the batteries currently being discharged and the requested discharging power of the first battery is calculated to obtain the total discharging power. Further, the sum of the charging power of all the batteries currently being charged and the requested charging power of the batteries currently requesting to be charged is calculated to obtain the total charging power. It is judged whether the total charging power is greater than or equal to the total discharging power; and if yes, it is determined that the discharging path for the first battery is from the first battery through the DC bus to the battery that is in the charging stage, and the first battery is controlled to be discharged following the determined discharging path; or if no, the first battery is controlled to suspend the discharging.

Specifically, after the charging system has established the charging and discharging connections with the plurality of batteries, the charging system detects, in real time, the current and voltage values actually outputted by the charging device connected to each battery. For each of the batteries currently being charged, the charging system detects the current and voltage values actually outputted by the charging device connected to the battery currently being discharged, and calculates the product of the current value and the voltage value to obtain the discharging power of the battery currently being discharged. The discharging power of each of the batteries currently being discharged can be calculated in the same manner. A requested discharging current and a requested discharging voltage of the first battery are extracted from the discharging request of the first battery, and the product of the requested discharging current and the requested discharging voltage is calculated to obtain the requested discharging power of the first battery. The sum of the discharging power of each of the batteries currently being discharged and the requested discharging power of the first battery is calculated to obtain the current total discharging power.

For each of the batteries currently being charged, the charging system likewise detects the charging device connected to the battery currently being charged to detect the current and voltage values actually outputted by the charging device, and calculates the product of the current and voltage values to obtain the charging power of the battery currently being charged. For each of the batteries currently requesting to be charged, the charging system extracts the requested charging current and the requested charging voltage from the charging request of the battery currently requesting to be charged, and calculates the product of the requested charging current and the requested charging voltage to obtain the charging request power of the battery currently requesting to be charged. The sum of the charging power of each battery currently being charged and the charging request power of each battery currently requesting to be charged is calculated to obtain the current total charging power. It is to be noted that for the charging request of the battery currently requesting to be charged, the charging device connected to the battery currently requesting to be charged will respond immediately in accordance with the requested charging current and the requested charging voltage carried in the charging request.

If it is judged that the preset power condition is currently satisfied, i.e., the total charging power is greater than or equal to the total discharging power, it is indicated that if the first battery is allowed to be discharged, the electric energy released therefrom can be accepted by batteries that are in the charging stage. Therefore, the charging system activates the discharging function of the charging device connected to the first battery and controls the discharging of the first battery based on the requested discharging current and the requested discharging voltage included in the discharging request of the first battery, at which time the current flows out of the first battery, passes through the DC bus, and flows directly into the batteries that are in the charging stage. If the preset power condition is currently not satisfied, i.e., the total charging power is less than the total discharging power, it is indicated that if the first battery is allowed to be discharged, the electric energy released therefrom cannot be accepted by batteries that are in the charging stage. Therefore, the charging system controls the first battery to suspend discharging.

By detecting the current and voltage values outputted from each charging device, the charging system implements the calculation of the total charging power and total discharging power of all the batteries, and through the automatic calculation of power as well as the logic of magnitude judgment of the total charging power and the total discharging power, it automatically judges whether or not the first battery is allowed to be discharged, so as to ensure that the electric energy released by the battery can be directly charged through the DC bus to the batteries that are in the charging stage, thus improving the charging efficiency and reducing the power loss.

With respect to controlling the battery requesting to be discharged to suspend discharging, in one implementation, a current voltage of the battery may be acquired from the discharging request of the battery, and an output voltage of the charging device connected to the battery may be controlled to be the current voltage of the battery, and after the output voltage of the charging device is the current voltage of the battery, the charging device is at the same electrical potential as the battery, so that the output current of the charging device is zero. In another implementation, the charging devices all come with a suspension function, and the charging system can control the charging device connected to this battery to activate the suspension function to suspend outputting of the current.

In the case where the total charging power is less than the total discharging power, the battery requesting to be discharged is controlled to suspend discharging so as to avoid the presence of redundant power in the whole charging system that cannot be accepted by the battery that is in the charging stage, so that by controlling the charging device that is connected to that battery to suspend outputting or the output current to be zero, the control process is made simple and efficient.

In some embodiments of the present application, there may be a plurality of batteries that are in a suspended discharging state at the same moment, and there may also be discharging requests of a plurality of batteries that are received at the same moment, and for the sake of convenience of description, embodiments of the present application refer to both batteries in a discharging suspended state and batteries currently requesting to be discharged as batteries to be discharged. In an application scenario where there exists a plurality of batteries to be discharged in the system, similarly, on a periodical basis, or when the presence of batteries switching from the discharging state to the charging state is detected, it is judged whether or not the preset power condition is satisfied, and then it is determined whether to control the discharging of these batteries to be discharged.

In the process of judging whether to control the discharging of these batteries to be discharged, all combinations of the plurality of batteries to be discharged are first determined, each combination in the all combinations at least including one battery to be discharged. For example, assuming that there are batteries A, B, and C that are currently in a discharging suspended state, all combinations of these three batteries consist of Battery A, Battery B, Battery C, (Battery A, Battery B), (Battery A, Battery C), (Battery B, Battery C) and (Battery A, Battery B, Battery C), for a total of 7 combination forms.

For each combination in the all combinations described above, discharging power of each of the batteries currently being discharged is calculated separately according to discharging parameters of each of the batteries currently being discharged; and requested discharging power of each of batteries to be discharged in each combination is calculated separately according to discharging parameters of the batteries to be discharged in each combination; and calculating a total discharging power corresponding to each combination separately according to the discharging power of all the batteries currently being discharged and requested discharging power of the batteries to be discharged in each combination.

That is, the charging system detects the current and voltage values actually outputted by the charging device currently connected to each battery, and calculates the product of the current and voltage values corresponding to each battery that is in the discharging state to obtain the discharging power of each battery that is in the discharging state. The product of the requested discharging current and the requested discharging voltage of each battery to be discharged included in the current combination is calculated to separately obtain the requested discharging power of each battery to be discharged in the combination. Then, the discharging power of each battery that is in the discharging state and the requested discharging power of each battery to be discharged in the combination are calculated to obtain the current total discharging power corresponding to the combination. For each battery that is in the charging state, the product of the current and voltage values that are outputted by the charging device corresponding to the battery is calculated to obtain the charging power of the battery that is in the charging state. The sum of the charging power of all the batteries that are in the charging state is calculated to obtain the current total charging power.

In the case where there exists a plurality of batteries to be discharged, for each combination form of the plurality of batteries to be discharged, the total discharging power corresponding to each combination form is calculated, so that it can be subsequently judged whether each combination form satisfies the preset power condition, enabling the charging and discharging control to be more flexible, which helps in seeking the optimal combination form for the charging and discharging control.

For each combination form, it is judged whether the preset power condition is satisfied, i.e., it is judged whether the current total charging power is greater than or equal to the total discharging power corresponding to the combination, and, if yes, it is determined that the combination satisfies the preset power condition, and the combination is treated as a candidate combination. For each combination in the all combinations, operations are performed in the manner described above to determine in the all combinations whether a combination whose total discharging power being less than or equal to the current total charging power exists.

If one or more candidate combinations are obtained through judgment in the above manner, a discharge path for the battery which is allowed to be discharged is determined based on the judged combinations, and the battery which is allowed to be discharged is controlled to be discharged.

In the case where a plurality of batteries to be discharged exist, all combinations of the plurality of batteries are determined and it is judged in terms of combinations whether or not each combination satisfies the preset power condition, so that it is possible to determine, based on the control situation of the total charging power and the total discharging power, that one or more of the batteries to be discharged are allowed to be discharged, thus enabling the process of controlling the plurality of batteries to be discharged in the case where there is a plurality of batteries to be discharged to be more flexible and more efficient.

In some embodiments, if it is judged that only one combination whose total discharging power being less than or equal to the current total charging power exists, the batteries to be discharged included in the judged combination are controlled to be discharged with a discharging path being from the batteries to be discharged in the combination via the DC bus to the batteries that are in the charging stage. In some other embodiments, if it is judged that a plurality of combinations whose total discharging power being less than or equal to the current total charging power exist, a target combination containing a maximum number of batteries is determined from the judged combinations; and if one target combination is determined, each battery to be discharged in the target combination is controlled to be discharged. If a plurality of target combinations are determined, a target combination in which batteries to be discharged are suspended from discharging for the greatest duration is selected from the plurality of target combinations, and each battery to be discharged in the selected target combination is controlled to be discharged.

When a plurality of candidate combinations judged exist, the combination containing a maximum number of batteries to be discharged is selected, so that more batteries to be discharged can be controlled to be discharged, thereby shortening the total charging duration of these batteries. When a plurality of combinations containing a maximum number of batteries to be discharged exist, a duration for which each battery to be discharged in the plurality of combinations is suspended from discharging is determined separately, and a battery to be discharged that has been suspended from discharging for the greatest duration is determined, and each battery to be discharged in the combination containing that battery to be discharged is controlled to be discharged. In this way, it is possible to ensure that the battery that has been suspended from discharging for the greatest duration resumes discharging, thereby avoiding an excessively long waiting time for that battery.

In embodiments of the present application, the situation where there exists a plurality of batteries establishing charging and discharging connections with the charging device at the same moment is taken into account, in which case a situation where a plurality of batteries are synchronously in a charging stage and synchronously in a discharging stage is prone to occur. When a plurality of batteries are synchronously in the discharging stage, it is easy to cause the total charging power in the whole system to be less than the total discharging power, which can easily cause a plurality of batteries to be in a discharging suspended state at the same time. On this basis, in embodiments of the present application, if the charging system detects that charging and discharging connections have been established with a plurality of batteries at the same moment, the charging system controls the charging device connected to each of these plurality of batteries to activate the charging function in sequence.

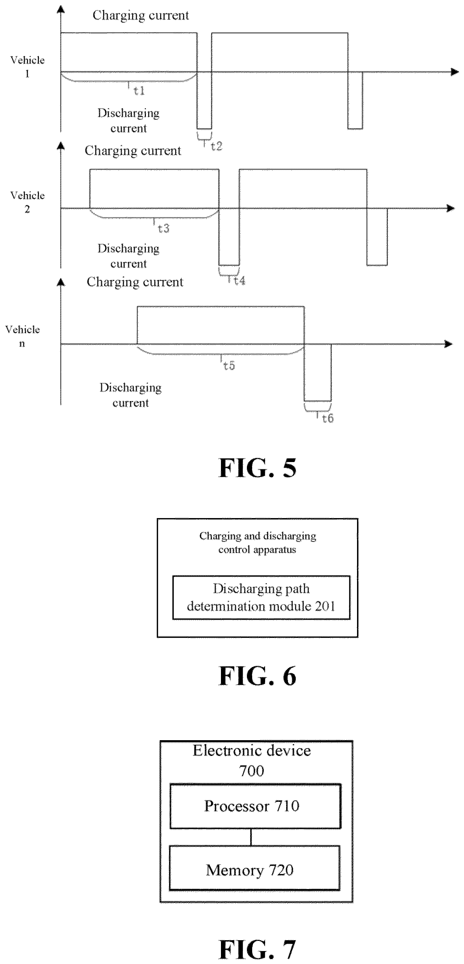

As shown in Fig. 5, vehicle 1, vehicle 2 and vehicle n are connected to the charging device at the same time, but in fact, at the beginning of charging, vehicle 1, vehicle 2 and vehicle n start to be charged successively, which can enable the charging stages of vehicle 1, vehicle 2 and vehicle n to be staggered with each other, so as to avoid simultaneous discharging of a plurality of vehicles at the same time period.

That is, although the plurality of batteries establishes charging and discharging connections with the charging system at the same time, the charging system controls the charging device to which each battery is connected to start up according to a certain time sequence, so that the actual charging processes of the plurality of batteries start in sequence, thereby making the discharging stages of the plurality of batteries not fully synchronized so as to reduce the occurrence of the situation in which the total charging power is less than the total discharging power, thus making the subsequent control process smoother, reducing the complexity of control and improving the charging efficiency.

In embodiments of the present application, in the case where the charging system establishes charging and discharging connections with a plurality of batteries at the same time, the charging system determines the discharging path for the battery requesting to be discharged based on the charging and discharging parameters of this plurality of batteries. This helps to make it possible for the power released from the batteries requesting to be discharged at the same moment to be charged through the DC bus directly into batteries requesting to be charged, so that the conversion path for this part of power is very short, thus enabling the power to be utilized in the most effective way, and leading to the highest efficiency of power conversion. In this embodiment, when performing continuous fast charging of the battery at a super-large rate, fast switching to the discharging mode is used to eliminate the aggregation of lithium ions at the negative electrode of the battery, which eliminates the risk of lithium plating in the battery cell, attenuates or even eliminates the battery polarization phenomenon, so that the degradation of the battery life can be effectively slowed down and the charging of the battery pack can be performed in a healthy state, thus improving the charging safety. The addition of a discharging step in the charging process greatly improves the rate at which charging is performed, which shortens the charging time overall. Even at low temperatures, it is possible to apply a mode of alternating charging and discharging to avoid the situation in conventional unidirectional charging where the battery pack must be heated up to wait for the temperature of the battery pack to reach a certain level before the charging current can be gradually increased. Moreover, since the conversion path for the power released from the battery is short, making power loss very low, no additional cost burden is imposed on the user. The commercialization needs are fully taken into account so that the cost of charging for vehicle owners is reduced and the cost of operating the charging station is reduced, thus saving energy and protecting the environment.

In order to facilitate the understanding of the charging and discharging control method proposed in the embodiments of the present application, it is described below in conjunction with specific examples. As shown in Fig. 2, it is assumed that the vehicles that are being charged at this time or are about to be charged are vehicle 1, vehicle 2, and vehicle n. After the physical connection between vehicle 1 and DC/DC1 in the charging system is completed, DC/DC1 establishes a communication connection with vehicle 1 and completes the configuration of charging parameters and then enters the charging process. The control unit of the charging system activates the charging functions of AC/DC and DC/DC 1 to perform outputting as required by the BMS of vehicle 1.

After time t1, vehicle 2 also establishes a physical connection with the charging system while vehicle 1 is being charged, and DC/DC2 establishes a communication connection with vehicle 2 and completes the configuration of the charging parameter to enter the charging process. During the charging processes for vehicle 1 and vehicle 2, if a discharging request sent by vehicle 2 is received, the total charging power Wc and the total discharging power Wdisc are calculated, and if Wc ≥ Wdisc, the control unit directly activates the discharging function of the DC/DC2, and the DC/DC2 performs outputting in accordance with the requested discharging current and the requested discharging voltage carried in the discharging request of vehicle 3, and the discharging path thereof is the battery of vehicle 2 → DC/DC2 → the DC bus → DC/DCm in the charging stage → the battery of vehicle m. Otherwise, the zero-current output state of the DC/DC2 is maintained and Wc and Wdisc are periodically calculated until Wc ≥ Wdisc, and then the discharging function of the DC/DC2 is activated.

After time t2, vehicle n establishes a physical connection with DC/DCn while vehicle 1 and vehicle 2 are being charged, and DC/DCn establishes a communication connection with vehicle n and completes the configuration of the charging parameter to enter the charging process. During the charging processes for vehicle 1, vehicle 2 and vehicle n, if a discharging request sent by vehicle n is received, Wc and Wdisc at this time are calculated, and if Wc ≥ Wdisc, the control unit directly activates the discharge function of the DC/DCn; otherwise, the zero-current output state of the DC/DCn is maintained and Wc and Wdisc are periodically calculated until Wc ≥ Wdisc, and then the discharging function of the DC/DCn is activated.

In the case where the charging system establishes charging and discharging connections with a plurality of batteries at the same time, the charging system determines the discharging path for the battery requesting to be discharged in accordance with the charging and discharging parameter of the battery, so that the power released from the batteries requesting to be discharged at the same moment can be directly charged through the DC bus into the batteries requesting to be charged, thus making the conversion path for this part of power short, which can both eliminate the accumulation of lithium ions at the negative electrode by means of discharging, and attenuate or even eliminate the battery polarization phenomenon, thus improving charging safety, and also help to enhance the charging rate of the battery and improve the charging efficiency, thus realizing the effect of safe and fast charging. Moreover, since the conversion path for the power released from the battery is short, making power loss very low, no additional cost burden is imposed on the user.

Embodiments of the present application further provide a charging and discharging control apparatus applied to a charging system, the charging system comprising at least two charging devices that are separately connected to batteries, the apparatus being used to perform the charging and discharging control method as provided in the embodiments described above. As shown in Fig. 6, the apparatus comprises:
a discharging path determination module 201 for determining, when at least one of the at least two batteries requests to be discharged, a discharging path for the battery requesting to be discharged according to charging and discharging parameters of batteries currently connected.

The discharging path determination module 201 is used for determining the discharging path for the battery requesting to be discharged according to charging and discharging parameters of each of the batteries currently connected and a preset power condition, wherein the preset power condition comprises a total charging power of all the batteries currently connected being greater than or equal to a total discharging power.

The discharging path determination module 201 is used for determining whether the preset power condition is currently satisfied according to the charging and discharging parameters of each of the batteries currently connected; and if yes, the discharging path for the battery requesting to be discharged is determined as flowing from the battery requesting to be discharged to a battery requesting to be charged via a DC bus; or if no, the battery requesting to be discharged is controlled to suspend discharging.

The discharging path determination module 201 is used for determining periodically during a preset duration whether the preset power condition is currently satisfied; or determining whether the preset power condition is currently satisfied whenever the presence of a battery switching from a discharging state to a charging state is detected during a preset duration.

The discharging path determination module 201 is used for determining, if the preset power condition is still not satisfied when a duration for which the battery requesting to be discharged is suspended from discharging reaches the preset duration, the discharging path as flowing from the battery requesting to be discharged to the power grid and/or to an energy storage apparatus in the charging system.

The discharging path determination module 201 is used for calculating the total discharging power of all the batteries currently connected according to discharging parameters of batteries currently being discharged and discharging request parameters of a battery currently requesting to be discharged; calculating the total charging power of all the batteries currently connected according to charging parameters of batteries currently being charged; and determining whether the preset power condition is currently satisfied according to the total charging power and the total discharging power.

The discharging path determination module 201 is used for calculating discharging power of all the batteries currently being discharged according to the discharging parameters of the batteries currently being discharged; calculating requested discharging power of the battery currently requesting to be discharged according to the discharging request parameter of the battery currently requesting to be discharged; and calculating the sum of the discharging power of all the batteries currently being discharged and the requested discharging power to obtain the total discharging power of all the batteries currently connected.

The discharging path determination module 201 is used for determining all combinations of the plurality of batteries to be discharged, each combination in the all combinations at least comprising one battery to be discharged; calculating discharging power of each of the batteries currently being discharged separately according to discharging parameters of each of the batteries currently being discharged; and calculating requested discharging power of each of batteries to be discharged in each combination separately according to discharging parameters of the batteries to be discharged in each combination; and calculating a total discharging power corresponding to each combination separately according to the discharging power of all the batteries currently being discharged and requested discharging power of the batteries to be discharged in each combination.

The discharging path determination module 201 is used for judging in the each combination whether a combination whose total discharging power being less than or equal to the total charging power exists; and if exists, determining that the preset power condition is currently satisfied.

The discharging path determination module 201 is used for: if it is judged that one combination whose total discharging power being less than or equal to the current total charging power exists, controlling batteries to be discharged in the judged combination to be discharged; or if it is judged that a plurality of combinations whose total discharging power being less than or equal to the total charging power exist, determining a target combination containing a maximum number of batteries to be discharged from the plurality of combinations; if one said target combination is determined, controlling each battery to be discharged in the target combination to be discharged; or if a plurality of said target combinations are determined, selecting from the plurality of target combinations a target combination in which batteries to be discharged are suspended from discharging for the greatest duration, and controlling each battery to be discharged in the selected target combination to be discharged.

The discharging path determination module 201 is used for controlling an output voltage of a charging device connected to the battery requesting to be discharged to be a current voltage of the battery requesting to be discharged; or controlling a charging device connected to the battery requesting to be discharged to suspend outputting.

The discharging path determination module 201 is used for: if the charging system establishes charging and discharging connections with a plurality of batteries at the same moment, controlling charging devices connected to the plurality of batteries to activate a charging function in sequence.

The charging and discharging control apparatus provided in the above embodiments of the present application is motivated by the same inventive concept as the charging and discharging control method provided in the embodiments of the present application, and has the same beneficial effect as the method employed, operated, or realized by the application stored therein.

Fig. 7 illustrates a schematic block diagram of an electronic device 700 of an embodiment of the present application. As shown in Fig. 7, the electronic device 700 comprises a processor 710, and optionally, the electronic device 700 also comprises a memory 720, wherein the memory 720 is used for storing a computer program, and the processor 710 is used for reading the computer program and performing, based on the computer program, the charging and discharging control method of various embodiments of the present application as previously described.

Embodiments of the present application also provide a computer-readable storage medium for storing a computer program, wherein the computer program, when executed by the processor, implements the method of various embodiments of the present application as previously described.

Those of ordinary skill in the art can realize that units and algorithm steps of each example described with reference to the examples disclosed herein can be implemented in electronic hardware, or a combination of computer software and electronic hardware. Whether these functions are performed in hardware or software depends on a specific application and a design constraint condition of the technical solution. Those skilled in the art can implement the described functions using different methods for each particular application, but such implementations should not be considered beyond the scope of the present application.

Those skilled in the art can clearly understand that, for the convenience and brevity of description, the specific working process of the system, apparatus, and unit described above may be obtained with reference to the corresponding process in the foregoing method embodiments, which will not be repeated here.

In the several examples provided in the present application, it should be understood that the disclosed system, apparatus, and method may be implemented in other manners. For example, the apparatus example described above is only illustrative. For example, the division of the units is only a logical function division. In an actual implementation, there may be other division methods. For example, a plurality of units or components may be combined or may be integrated into another system, or some features may be ignored, or not implemented. On the other hand, the shown or discussed mutual coupling or direct coupling or communication connection may be indirect coupling or communication connection through some interfaces, apparatuses, or units, and may be in electrical, mechanical, or in other forms.

The units described as separate components may or may not be physically separated, and components displayed as units may or may not be physical units, that is, may be located in one place, or may be distributed to a plurality of network units. Some or all of the units may be selected according to actual needs to achieve the purpose of the solution in this embodiment.

Alternatively, the various functional units in various embodiments of the present application may be integrated in a single processing unit, or may be physically present separately, or two or more units may be integrated in a single unit.

The functions may be stored in a computer-readable storage medium if implemented as a software functional unit and sold or used as a separate product. Based on such understanding, the technical solution of the present application, or the part of the technical solution that essentially contributes to the prior art, can be embodied in the form of a software product, wherein this computer software product is stored in a storage medium and includes a number of instructions to cause a computer device (which may be a personal computer, a server, or a network device, etc.) to perform all or some of the steps of the methods described in various embodiments of the present application. The aforementioned storage media include: a USB flash drive, a portable hard disk, a read-only memory (ROM), a random access memory (RAM), a magnetic disk or an optical disk, and other media that can store program code.

What mentioned above is only the specific implementation of the present application, but the scope of protection of the present application is not limited to this, and any person skilled in the art can easily think of variations or substitutions within the technical scope disclosed in the present application, which should be covered by the scope of protection of the present application. Therefore, the scope of protection of the present application shall be stated to be subject to the scope of protection of the claims.

## Claims

1. A charging and discharging control method applied to a charging system, the charging system comprising at least two charging devices that are separately connected to batteries, the method comprising:
determining, when at least one of the at least two batteries requests to be discharged, a discharging path for the battery requesting to be discharged according to charging and discharging parameters of batteries currently connected.

2. The method according to claim 1, wherein said determining a discharging path for the battery requesting to be discharged according to charging and discharging parameters of batteries currently connected comprises:
determining the discharging path for the battery requesting to be discharged according to charging and discharging parameters of each of the batteries currently connected and a preset power condition, wherein the preset power condition comprises a total charging power of all the batteries currently connected being greater than or equal to a total discharging power.

3. The method according to claim 2, wherein said determining the discharging path for the battery requesting to be discharged according to charging and discharging parameters of each of the batteries currently connected and a preset power condition comprises:
determining whether the preset power condition is currently satisfied according to the charging and discharging parameters of each of the batteries currently connected; and
if yes, determining the discharging path for the battery requesting to be discharged as flowing from the battery requesting to be discharged to a battery requesting to be charged via a DC bus; or
if no, controlling the battery requesting to be discharged to suspend discharging.

4. The method according to claim 3, wherein after said controlling the battery requesting to be discharged to suspend discharging, the method further comprises:
determining periodically during a preset duration whether the preset power condition is currently satisfied; or
determining whether the preset power condition is currently satisfied whenever the presence of a battery switching from a discharging state to a charging state is detected during a preset duration.

5. The method according to claim 4, wherein the method further comprises:
determining, if the preset power condition is still not satisfied when a duration for which the battery requesting to be discharged is suspended from discharging reaches the preset duration, the discharging path as flowing from the battery requesting to be discharged to the power grid and/or to an energy storage apparatus in the charging system.

6. The method according to claim 3, wherein said determining whether the preset power condition is currently satisfied according to the charging and discharging parameters of each of the batteries currently connected comprises:
calculating the total discharging power of all the batteries currently connected according to discharging parameters of batteries currently being discharged and discharging request parameters of the battery currently requesting to be discharged;
calculating the total charging power of all the batteries currently connected according to charging parameters of batteries currently being charged; and
determining whether the preset power condition is currently satisfied according to the total charging power and the total discharging power.

7. The method according to claim 6, wherein said calculating the total discharging power of all the batteries currently connected according to discharging parameters of batteries currently being discharged and discharging request parameters of the battery currently requesting to be discharged comprises:
calculating discharging power of all the batteries currently being discharged according to the discharging parameters of the batteries currently being discharged;
calculating requested discharging power of the battery currently requesting to be discharged according to the discharging request parameters of the battery currently requesting to be discharged; and
calculating the sum of the discharging power of all the batteries currently being discharged and the requested discharging power to obtain the total discharging power of all the batteries currently connected.

8. The method according to claim 6, wherein if a plurality of batteries to be discharged that are suspended from discharging and currently requesting to be discharged exist, calculating the total discharging power of all the batteries currently connected according to the discharging parameters of batteries currently being discharged and discharging request parameters of the battery currently requesting to be discharged comprises:
determining all combinations of the plurality of batteries to be discharged, each combination in said all combinations at least comprising one battery to be discharged;
calculating discharging power of each of the batteries currently being discharged separately according to discharging parameters of each of the batteries currently being discharged; and calculating requested discharging power of each of batteries to be discharged in each combination separately according to discharging parameters of the batteries to be discharged in each combination; and
calculating a total discharging power corresponding to each combination separately according to the discharging power of all the batteries currently being discharged and requested discharging power of the batteries to be discharged in each combination.

9. The method according to claim 8, wherein determining whether the preset power condition is currently satisfied according to the total charging power and the total discharging power comprises:
judging in each combination whether a combination whose total discharging power being less than or equal to the total charging power exists; and
if exists, determining that the preset power condition is currently satisfied.

10. The method according to claim 9, wherein the method further comprises:
if it is judged that one combination whose total discharging power being less than or equal to the current total charging power exists, controlling batteries to be discharged in the judged combination to be discharged; or
if it is judged that a plurality of combinations whose total discharging power being less than or equal to the total charging power exist, determining a target combination containing a maximum number of batteries to be discharged from the plurality of combinations; if one said target combination is determined, controlling each battery to be discharged in the target combination to be discharged; or if a plurality of said target combinations are determined, selecting from the plurality of target combinations a target combination in which batteries to be discharged are suspended from discharging for the greatest duration, and controlling each battery to be discharged in the selected target combination to be discharged.

11. The method according to claim 3, wherein said controlling the battery requesting to be discharged to suspend discharging comprises:
controlling an output voltage of a charging device connected to the battery requesting to be discharged to be a current voltage of said battery requesting to be discharged; or
controlling a charging device connected to the battery requesting to be discharged to suspend outputting.

12. The method according to any one of claims 1-11, wherein the method further comprises:
if the charging system establishes charging and discharging connections with a plurality of batteries at the same moment, controlling charging devices connected to the plurality of batteries to activate a charging function in sequence.

13. A charging and discharging control apparatus applied to a charging system, the charging system comprising at least two charging devices that are separately connected to batteries, the apparatus comprising:
a discharging path determination module for determining, when at least one of the at least two batteries requests to be discharged, a discharging path for the battery requesting to be discharged according to charging and discharging parameters of batteries currently connected.

14. A charging system, comprising: a control unit, a power converter, a DC bus and a plurality of charging devices, wherein
the power converter is separately connected with the power grid and the DC bus;
the plurality of charging devices are all connected with the DC bus, and each of the charging devices is used for connecting with a battery; and
the control unit is used for executing the method according to any one of claims 1 to 12.

15. The charging system according to claim 14, further comprising an energy storage apparatus and a corresponding voltage converter thereof, wherein
the energy storage apparatus is connected with the DC bus through the voltage converter.

16. An electronic device, comprising a memory, a processor, and a computer program stored in the memory and executable on the processor, wherein the processor, when executing the computer program, implements the method according to any one of claims 1-12.

17. A computer-readable storage medium storing a computer program, wherein the computer program, when executed by a processor, implements the method according to any one of claims 1-12.
